# EUROPÄISCHE PATENTSCHRIFT

(11) **EP 2 002 156 B1**
(45) Veröffentlichungstag und Bekanntmachung des Hinweises auf die Patenterteilung: **25.07.2018**
(21) Anmeldenummer: 07712326.3
(22) Anmeldetag: 27.02.2007
(51) Int. Cl.: F16H 61/04, F16H 61/12, F16H 61/20

(54) **VERFAHREN ZUM BETREIBEN EINES AUTOMATGETRIEBES**
METHOD FOR OPERATING AN AUTOMATIC GEARBOX
PROCÉDÉ POUR FAIRE FONCTIONNER UNE BOÎTE DE VITESSES AUTOMATIQUE

(30) Priorität: 31.03.2006 DE 102006014947
(43) Veröffentlichungstag der Anmeldung: 17.12.2008
(73) Patentinhaber: ZF Friedrichshafen AG, 88046 Friedrichshafen (DE)
(72) Erfinder: POPP, Christian, 88079 Kressbronn (DE); STEINHAUSER, Klaus, 88079 Kressbronn (DE); SCHMIDT, Thilo, 88074 Meckenbeuren (DE); SCHIELE, Peter, 88079 Kressbronn (DE); ALLGAIER, Bernd, 88079 Kressbronn (DE)
(86) Internationale Anmeldenummer: PCT/EP2007/051834
(87) Internationale Veröffentlichungsnummer: WO 2007/113059

(56) Entgegenhaltungen:
- EP-A- 1 502 804
- EP-A2- 1 398 537
- DE-A1- 10 043 510
- DE-A1-102004 035 504
- FR-A1- 2 855 583
- US-A- 5 460 581
- US-A1- 2004 053 734
- US-A1- 2004 087 410
- US-A1- 2004 132 576
- US-A1- 2006 046 892

## Beschreibung

Die Erfindung betrifft ein Verfahren zum Betreiben eines Automatgetriebes nach dem Oberbegriff des Anspruchs 1, wie aus der EP 1 398 537 bzw. der US 2004/053734 bekannt.

Fahrzeuge benötigen Getriebe, um Drehmomente und Drehzahlen zu wandeln. Aufgabe eines Fahrzeuggetriebes ist es, das Zugkraftangebot eines Antriebsaggregats umzusetzen. Die hier vorliegende Erfindung betrifft ein Verfahren zum Betreiben eines Automatgetriebes. Im Sinne der hier vorliegenden Erfindung sollen unter dem Begriff Automatgetriebe alle Getriebe mit einem automatischen Gangwechsel verstanden werden, die auch als Stufenautomatgetriebe bezeichnet werden.

Bei der Entwicklung von Automatgetrieben ist ein Trend nach einer sich zunehmend vergrößernden Ganganzahl für insbesondere die Vorwärtsgänge eines Automatgetriebes feststellbar. So befinden sich derzeit Automatgetriebe mit acht Vorwärtsgängen in der Entwicklung, wobei solche Automatgetriebe mit acht Vorwärtsgängen über mindestens fünf Schaltelemente verfügen, und wobei zur Momentübertragung bzw. Kraftübertragung an einem solchen Automatgetriebe mindestens drei dieser mindestens fünf Schaltelemente in einem Vorwärtsgang sowie in einem Rückwärtsgang geschlossen sind. Befindet sich ein derartiges Automatgetriebe in Neutralposition, so muss dasselbe in der Neutralposition vor einem unerwünschten Momentschluss bzw. Kraftschluss gesichert werden, da ansonsten ein Kraftfahrzeug mit einem solchen Automatgetriebe sich ungewollt in Bewegung setzen könnte. Bislang sind jedoch keine Verfahren zum Betreiben solcher Automatgetriebe bekannt, die eine umfassende Absicherung der Automatgetriebe in der Neutralposition gewährleisten.

Aus der EP 1398537 A2 sind diverse Getriebeschemata für ein Automatgetriebe mit jeweils fünf Reibschaltelementen bekannt, von denen in jedem Gang drei geschlossen und zwei geöffnet sind. Dabei sind in kraftschlussfreier Neutralposition zwei der fünf Schaltelemente geschlossen, und zwar zwei derjenigen Schaltelemente, die sowohl im ersten Vorwärtsgang als auch im Rückwärtsgang geschlossen sind.

Die ein Verfahren zum Gangauslegen eines Automatgetriebes während der Fahrt betreffende FR 2855583 A1 offenbart in ihrem einzigen Ausführungsbeispiel ein Getriebeschema eines Automatgetriebes mit insgesamt fünf Schaltelementen, von denen in jedem Gang zwei geschlossen sind, wobei kraftschlussfreier Neutralposition alle fünf Schaltelemente geöffnet sind. Im Rahmen der Verwendung einer Wärmebilanz regt die FR 2855583 A1 auch an, dass bei einem Getriebe, bei dem in jedem Gang drei oder mehr Schaltelemente geschlossen sind, zum Gangauslegen im Fahrbetrieb aus einem beliebigen Gang heraus ein oder zwei Schaltelement ganz geöffnet oder in Schlupf gebracht werden können.

Auch aus der US 2004/0132576 A1 sind Automatgetriebe bekannt, bei denen in kraftschlussfreier Neutralposition alle Schaltelemente des Getriebes geöffnet sind, hier für ein 6-Gang-Doppelkupplungsgetriebe in Planetenbauweise, jeweils mit zwei Lamellenkupplungen, acht Klauen-Schalt-elementen und vier Planetenradsätzen, wobei in jedem Gang eine Lamellenkupplung und zwei Klauen-Schaltelemente in Eingriff sind.

Aus der US 2004/053734 A1 sind 7-Gang-Automatgetriebe mit sechs Reibschaltelementen bekannt, von denen in jedem Gang drei geschlossen und drei offen sind. In Neutralposition des Getriebes hingegen ist nur eines der Reibschaltelemente geschlossen.

Hiervon ausgehend liegt der vorliegenden Erfindung das Problem zu Grunde, ein neuartiges Verfahren zum Betreiben eines Automatgetriebes zu schaffen.

Nach einem ersten Aspekt der hier vorliegenden Erfindung wird dieses Problem durch ein Verfahren zum Betreiben eines Automatgetriebes gemäß Anspruch 1 gelöst. Hiernach ist in einer Neutralposition des Automatgetriebes zur Sicherung desselben vor einem nicht erwünschten Momentschluss bzw. Kraftschluss mindestens eines der im jeweiligen Vorwärtsgang bzw. Rückwärtsgang geschlossenen Schaltelemente vollständig geöffnet.

Nach einem nicht beanspruchten zweiten Aspekt der hier vorliegenden Erfindung wird dieses Problem durch ein Verfahren zum Betreiben eines Automatgetriebes gelöst, bei dem in einer Neutralposition des Automatgetriebes zur Sicherung desselben vor einem nicht erwünschten Momentschluss bzw. Kraftschluss alle der im jeweiligen Vorwärtsgang bzw. Rückwärtsgang geschlossenen Schaltelemente geschlossen sind, wohingegen ein weiteres sich im Antriebsstrang befindliches Schaltelement, welches sich auch innerhalb der Getriebeeinheit befinden kann, vollständig geöffnet ist.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Getriebeschema eines Automatgetriebes mit fünf Schaltelementen, bei welchem das erfindungsgemäße Verfahren vorteilhaft verwendbar ist;
- Fig. 2: eine Schaltelementmatrix für die Schaltelemente des Getriebeschemas der Fig. 1 zur Verdeutlichung welche Schaltelemente in welchem Gang geschlossen sind.

### (weiter auf Seite 3 der ursprünglichen Unterlagen)

Die hier vorliegende Erfindung betrifft ein Verfahren zum Betreiben eines Automatgetriebes.

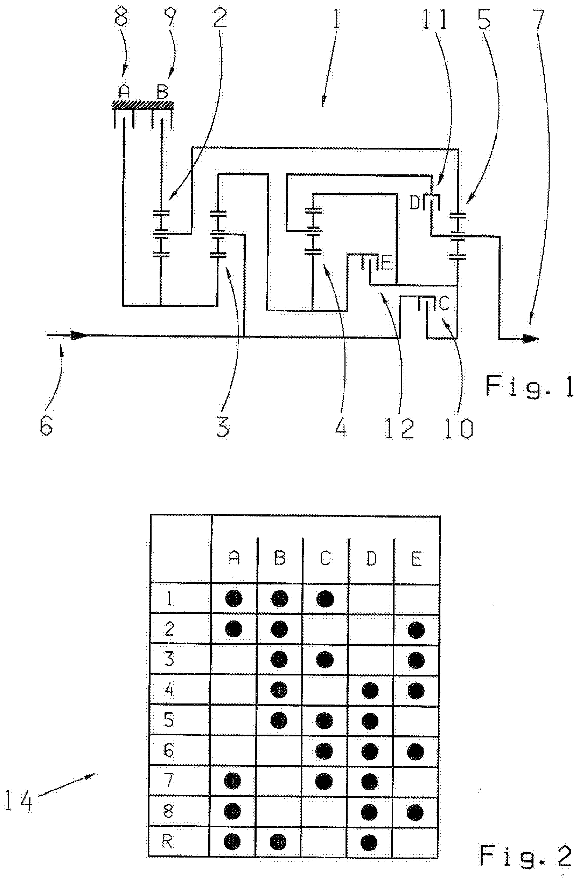

Fig. 1 zeigt ein Getriebeschema 1 eines Stufenautomatgetriebes, bei welchem das erfindungsgemäße Verfahren zum Betreiben eines Automatgetriebes bevorzugt Verwendung findet. So verfügt das Automatgetriebe der Fig. 1 über insgesamt vier Getrieberadsätze 2, 3, 4 und 5 um ein an einem Getriebeeingang 6 anliegendes Getriebeeingangsmoment in ein Getriebeausgangsmoment an einem Getriebeausgang 7 umzusetzen. Die Getrieberadsätze 2, 3, 4 und 5 des Automatgetriebes sind dabei gemäß Fig. 1 als Planetenrad-Getrieberadsätze ausgeführt.

Gemäß dem Getriebeschema 1 der Fig. 1 verfügt das Automatgetriebe neben den vier Getrieberadsätzen 2 bis 5 weiterhin über insgesamt fünf Schaltelemente 8, 9, 10, 11 und 12, wobei das Schaltelement 8 auch als Schaltelement A, das Schaltelement 9 auch als Schaltelement B, das Schaltelement 10 auch als Schaltelement C, das Schaltelement 11 auch als Schaltelement D und das Schaltelement 12 auch als Schaltelement E bezeichnet wird. Bei dem Schaltelement A sowie Schaltelement B handelt es sich jeweils um Bremsen, bei den Schaltelementen C, D und E handelt es sich jeweils um Kupplungen. Die Schaltelemente 8 bis 12 sind an sich bekannte Schaltelemente des Getrieberadsatzsystems.

Für das in Fig. 1 schematisiert dargestellte Automatgetriebe, welches die fünf Schaltelemente 8 bis 12 umfasst, können unter Verwendung der z. B. in Fig. 2 dargestellten Schaltungsmatrix 14 acht Vorwärtsgänge sowie ein Rückwärtsgang realisiert werden, wobei in der linken Spalte der Schaltungsmatrix 14 die acht Vorwärtsgänge "1" bis "8" sowie der Rückwärtsgang "R" und in der oberen Zeile der Schaltungsmatrix 14 die Schaltelemente A bis E aufgetragen sind. Schaltelemente, die in der Schaltelementmatrix 14 mit einem Punkt markiert sind, sind im jeweiligen Gang geschlossen. In jedem Vorwärtsgang sowie im Rückwärtsgang sind demnach jeweils drei der fünf Schaltelemente geschlossen.

So sind z. B. für den Vorwärtsgang "1" die Schaltelemente A, B und C sowie für den Rückwärtsgang "R" die Schaltelemente A, B und D geschlossen. Die anderen Schaltelemente sind hingegen im jeweiligen Gang vollständig geöffnet.

Zur Kraftübertragung bzw. Drehmomentübertragung vom Getriebeeingang 6 auf den Getriebeausgang 7 sind demnach bei dem in Fig. 1 dargestellten Automatgetriebe in jedem Gang drei Schaltelemente vollständig geschlossen, zwei Schaltelemente sind hingegen vollständig geöffnet.

Die hier vorliegende Erfindung stellt nun ein Verfahren zum Betreiben eines solchen Automatgetriebes bereit, um dasselbe in einer Neutralposition vor einem unerwünschten Kraftschluss bzw. Momentschluss zu sichern.

Nach einem ersten Aspekt der hier vorliegenden Erfindung ist in der Neutralposition des Automatgetriebes zur Sicherung desselben vor einem nicht erwünschten Kraftschluss mindestens eines der im jeweiligen Vorwärtsgang bzw. Rückwärtsgang geschlossenen Schaltelemente vollständig geöffnet. Dies kann dabei durch folgende vier Alternativen realisiert werden.

Nach einer ersten Alternative des ersten Aspekts der hier vorliegenden Erfindung sind zur Sicherung des Automatgetriebes in der Neutralposition alle drei im jeweiligen Vorwärtsgang bzw. Rückwärtsgang geschlossenen Schaltelemente in der Neutralposition vollständig geöffnet.

Diese erste Alternative des ersten Aspekts der hier vorliegenden Erfindung findet vor allem dann Anwendung, wenn in der Neutralposition Wert auf Sicherheit gegen Mehrfachfehler gelegt wird, wenn eine hydraulische Haltefunktion, z. B. bei Einfall in einen Notlauf, zum Einlegen einer Fahrposition führen würde, oder wenn dies aus Gründen der Getriebemechanik, z. B. wegen interner Drehzahlverhältnisse, erforderlich ist.

Im gezeigten Ausführungsbeispiel findet die erste Alternative des ersten Aspekts der hier vorliegenden Erfindung dann Anwendung, wenn das Automatgetriebe ausgehend vom Vorwärtsgang "6" in die Neutralposition überführt worden ist.

Nach einer zweiten Alternative des ersten Aspekts der hier vorliegenden Erfindung sind zur Sicherung des Automatgetriebes in der Neutralposition zwei der drei im jeweiligen Vorwärtsgang bzw. Rückwärtsgang geschlossenen Schaltelemente in der Neutralposition vollständig geöffnet, wohingegen ein drittes der drei im jeweiligen Vorwärtsgang bzw. Rückwärtsgang geschlossenen Schaltelemente in der Neutralposition geschlossen ist.

Diese zweite Alternative des ersten Aspekts der hier vorliegenden Erfindung findet vorzugsweise dann Anwendung, wenn in der Neutralposition Sicherheit gegenüber Einfachfehlern gewährleistet werden soll, bei gleichzeitig ausreichender Reaktionszeit bei einem anschließenden Gangeinlegen.

Im gezeigten Ausführungsbeispiel findet die zweite Alternative des ersten Aspekts der hier vorliegenden Erfindung dann Anwendung, wenn das Automatgetriebe ausgehend vom Vorwärtsgang "3" oder vom Vorwärtsgang "4" oder vom Vorwärtsgang "5" oder vom Vorwärtsgang "7" oder vom Vorwärtsgang "8" in die Neutralposition überführt worden ist.

Nach einer dritten Alternative des ersten Aspekts der hier vorliegenden Erfindung ist zur Sicherung des Automatgetriebes in der Neutralposition ein erstes der im jeweiligen Vorwärtsgang bzw. Rückwärtsgang geschlossenen Schaltelemente in der Neutralposition vollständig geöffnet, ein zweites der im jeweiligen Vorwärtsgang bzw. Rückwärtsgang geschlossenen Schaltelemente ist in der Neutralposition derart teilbefüllt, dass kein oder annähernd kein Drehmoment von dem zweiten Schaltelement übertragen wird, ein drittes der im jeweiligen Vorwärtsgang bzw. Rückwärtsgang geschlossenen Schaltelemente ist hingegen in der Neutralposition geschlossen. Im teilbefüllten Zustand eines Schaltelements ist ein sogenanntes Luftspiel desselben überwunden.

Diese dritte Alternative des ersten Aspekts der hier vorliegenden Erfindung findet vorzugsweise dann Verwendung, wenn in der Neutralposition ausreichend Sicherheit gegenüber Einfachfehlern gewährleistet werden soll, was zumindest bedeutet, dass ein Fahrzeuganrollen nicht möglich ist, und gleichzeitig eine gute Reaktionszeit bei einem anschließenden Gangeinlegen vorhanden sein soll.

Im gezeigten Ausführungsbeispiel findet die dritte Alternative des ersten Aspekts der hier vorliegenden Erfindung dann Anwendung, wenn das Automatgetriebe ausgehend vom Vorwärtsgang "1" oder Vorwärtsgang "2" oder vom Rückwärtsgang "R" in die Neutralposition überführt worden ist.

Die obigen drei Alternativen des ersten Aspekts der hier vorliegenden Erfindung bieten alle für sich genommen eine ausreichende Absicherung eines Automatgetriebes in der Neutralposition vor einem nicht erwünschten Kraftschluss bzw. Momentschluss und werden, wie oben ausgeführt, abhängig von den Gängen, von welchen das Automatgetriebe in die Neutralposition überführt worden ist, in Kombination miteinander zum Betreiben eines Automatgetriebes verwendet.

So wird in den Neutralpositionen, von denen aus standardmäßig ein Gangeinlegen absolviert wird, die Alternative (dritte Alternative) gewählt, welche die beste Reaktionszeit bietet. Für die anderen Gänge, in welchen ein Gangeinlegen standardmäßig nur während der Fahrt vorgenommen wird, wird die Alternative (zweite Alternative) gewählt, die den größeren Schwerpunkt auf Sicherheit legt, da dann die Reaktionszeit nicht so kritisch ist.

Sollten hydraulische bzw. getriebemechanische Gründe vorhanden sein, die es nicht erlauben, ein Schaltelement geschlossen zu halten, so wird die erste Alternative gewählt.

Nach einer vierten Alternative des ersten Aspekts der hier vorliegenden Erfindung sind zur Sicherung des Automatgetriebes in der Neutralposition zwei der drei im jeweiligen Vorwärtsgang bzw. Rückwärtsgang geschlossenen Schaltelemente in der Neutralposition geschlossen, wohingegen ein drittes der drei im jeweiligen Vorwärtsgang bzw. Rückwärtsgang geschlossenen Schaltelemente vollständig geöffnet ist.

Dann, wenn diese vierte Alternative des ersten Aspekts der Erfindung verwendet werden soll, muss mindestens eine weitere Maßnahme zur Sicherung des Automatgetriebes aktiviert werden, so z. B. eine Motordrehzahlbegrenzung und/oder eine Fahrzeugfeststellbremsbetätigung und/oder eine Fahrpedalbetätigungsbegrenzung. Alternativ zu den oder in Kombination mit den obigen Maßnahmen kann als weitere Maßnahme zur zusätzlichen Sicherung des Automatgetriebes eine Abtriebsdrehzahlüberwachung in Kombination mit einer Neigungsüberwachung des Kraftfahrzeugs verwendet werden.

Nach einem zweiten Aspekt der hier vorliegenden Erfindung sind zur Sicherung eines Automatgetriebes in der Neutralposition vor einem nicht erwünschten Momentfluss bzw. Kraftfluss alle drei im jeweiligen Vorwärtsgang bzw. Rückwärtsgang geschlossenen Schaltelemente auch in der Neutralposition geschlossen, wobei dieser zweite Aspekt der Erfindung nur an einem Automatgetriebe verwendet werden kann, bei welchem die Momentübertragung bzw. Kraftübertragung im Vorwärtsgang bzw. Rückwärtsgang über ein weiteres sich im Antriebsstrang befindliches Schaltelement beeinflusst werden kann, wobei sich das weitere Schaltelement auch innerhalb der Getriebeeinheit befinden kann.

Bei diesem weiteren Schaltelement kann es sich z. B. um ein externes Anfahrelement handeln. Derartige externe Anfahrelement sind z. B. bei Parallelhybridsystemen, bei welchen ein Elektromotor und ein Verbrennungsmotor auf ein Automatgetriebe wirkt, dem Automatgetriebe vorgeschaltet. Die Alternativen des ersten Aspekts der Erfindung zur Ansteuerung der Schaltelemente in der Neutralposition sind mit diesem zweiten Aspekt zur Ansteuerung des weiteren Schaltelements nach dem zweiten Aspekt der Erfindung kombinierbar.

Obwohl unter Bezugnahme auf Fig. 1 und 2 die Erfindung für den bevorzugten Anwendungsfall eines Automatgetriebes mit fünf Schaltelementen, von welchen jeweils drei in einem Vorwärtsgang und einem Rückwärtsgang geschlossen sind, beschrieben wurde, sei an dieser Stelle darauf hingewiesen, dass die Erfindung auch bei Automatgetrieben mit einer größeren Anzahl von Schaltelementen verwendet werden kann, und zwar auch dann, wenn pro Gang eine größere Anzahl an Schaltelementen geschlossen ist. Für diesen Fall werden die Anzahl der offenen bzw. teilbefüllten Schaltelemente auf diese Systeme übertragen und die zusätzlichen Schaltelemente geschlossen gehalten, sodass zu dem oben beschriebenen Verfahren dann nur die Anzahl der geschlossenen Schaltelemente unterschiedlich ist.

Abschließend sei darauf hingewiesen, dass die Schaltelemente A bis E bzw. 8 bis 12, die nach dem ersten Aspekt der Erfindung angesteuert werden, auch als getriebeinterne bzw. als getrieberadsatzsysteminterne Schaltelemente bezeichnet werden können, wohingegen dann das weitere sich im Antriebsstrang befindliche Schaltelement, welches beim zweiten Aspekt der Erfindung von Bedeutung ist, als getriebeexternes bzw. als getrieberadsatzsystemexternes Schaltelement bezeichnet werden kann.

### Bezugszeichen

- 1: Getriebeschema
- 2: Getrieberadsatz
- 3: Getrieberadsatz
- 4: Getrieberadsatz
- 5: Getrieberadsatz
- 6: Getriebeeingang
- 7: Getriebeausgang
- 8: Schaltelement A
- 9: Schaltelement B
- 10: Schaltelement C
- 11: Schaltelement D
- 12: Schaltelement E
- 14: Schaltelementmatrix

## Patentansprüche

1. Verfahren zum Betreiben eines Automatgetriebes eines Kraftfahrzeugs, insbesondere eines Stufenautomatgetriebes, wobei das Automatgetriebe mindestens fünf Schaltelemente aufweist, wobei zur Drehmomentübertragung bzw. Kraftübertragung in jedem Vorwärts- und Rückwärtsgang mindestens drei Schaltelemente geschlossen sind, und wobei in einer Neutralposition des Automatgetriebes zur Sicherung desselben vor einem nicht erwünschten Drehmomentschluss bzw. Kraftschluss mindestens eines der im jeweiligen Vorwärtsgang bzw. Rückwärtsgang geschlossenen Schaltelemente vollständig geöffnet ist, **dadurch gekennzeichnet, dass** in der Neutralposition des Automatgetriebes ein erstes der im jeweiligen Vorwärtsgang bzw. Rückwärtsgang geschlossenen Schaltelemente vollständig geöffnet ist, ein zweites der im jeweiligen Vorwärtsgang bzw. Rückwärtsgang geschlossenen Schaltelemente derart teilbefüllt ist, dass von demselben kein oder annähend kein Drehmoment übertragen wird, und ein drittes der im jeweiligen Vorwärtsgang bzw. Rückwärtsgang geschlossenen Schaltelemente geschlossen ist.

2. Verfahren nach Anspruch 1, **dadurch gekennzeichnet, dass** das Automatgetriebe genau fünf Schaltelemente aufweist, von denen zur Drehmomentübertragung bzw. Kraftübertragung in jedem Vorwärts- und Rückwärtsgang drei Schaltelemente geschlossen sind.

## Claims

1. Method for operating an automatic transmission of a motor vehicle, in particular a multi-stage automatic transmission, wherein the automatic transmission has at least five shift elements, wherein at least three shift elements are closed for the transmission of torque or transmission of power in each forward and reverse gear ratio, and wherein, in a neutral position of the automatic transmission, in order to safeguard the latter against an undesired torque-transmitting or power-transmitting connection, at least one of the shift elements that is closed in the respective forward gear ratio or reverse gear ratio is fully opened, **characterized in that**, in the neutral position of the automatic transmission, a first of the shift elements that is closed in the respective forward gear ratio or reverse gear ratio is fully opened, a second of the shift elements that is closed in the respective forward gear ratio or reverse gear ratio is partially filled such that it transmits no torque or approximately no torque, and a third of the shift elements that is closed in the respective forward gear ratio or reverse gear ratio is closed.

2. Method according to Claim 1, **characterized in that** the automatic transmission has exactly five shift elements, of which three shift elements are closed for the transmission of torque or transmission of power in each forward and reverse gear ratio.

## Revendications

1. Procédé pour faire fonctionner une boîte de vitesses automatique d'un véhicule automobile, en particulier une boîte de vitesses automatique étagée, la boîte de vitesses automatique présentant au moins cinq éléments de commutation, au moins trois éléments de commutation étant fermés pour le transfert de couple ou le transfert de force dans chaque vitesse de marche avant et de marche arrière, et, dans une position neutre de la boîte de vitesses automatique, pour protéger celle-ci contre un engagement de couple ou de force non souhaité au moins l'un des éléments de commutation fermés dans la vitesse de marche avant ou de marche arrière respective étant complètement ouvert, **caractérisé en ce que** dans la position neutre de la boîte de vitesses automatique, un premier des éléments de commutation fermé dans la vitesse de marche avant ou de marche arrière respective est complètement ouvert, un deuxième des éléments de commutation fermé dans la vitesse de marche avant ou de marche arrière respective est en partie rempli de telle sorte qu'il ne transfère aucun couple ou pratiquement aucun couple, et un troisième des éléments de commutation fermés dans la vitesse de marche avant ou de marche arrière respective est fermé.

2. Procédé selon la revendication 1, **caractérisé en ce que** la boîte de vitesses automatique présente exactement cinq éléments de commutation, dont trois éléments de commutation sont fermés en vue du transfert de couple ou de force dans chaque vitesse de marche avant et de marche arrière.
